# EUROPEAN PATENT SPECIFICATION

(11) **EP 0 347 503 B1**
(45) Date of publication and mention of the grant of the patent: **04.05.1994**
(21) Application number: 88305797.8
(22) Date of filing: 23.06.1988
(51) Int. Cl.: B29C 51/26, B29C 67/22, B29C 51/06

(54) **Process for manufacture of material-covered product**
Verfahren zur Herstellung beschichteter Produkte
Procédé pour la fabrication de produits revêtus

(43) Date of publication of application: 27.12.1989
(73) Proprietor: ATOMA INTERNATIONAL INC., Newmarket, Ontario L3Y 4X7 (CA)
(72) Inventor: Rohn, Wolfgang, Newmarket Ontario L3Y 4V9 (CA)
(74) Representative: Brown, David Alan

(56) References cited:
- DE-A- 3 034 973
- DE-A- 3 633 920
- DE-A- 3 633 921
- FR-A- 2 280 491
- FR-A- 2 293 398
- FR-A- 2 578 189
- INDUSTRIE DES PLASTIQUES MODERNES, vol. 8, no. 8, 10th September 1956, page 26:"Outillages et procédés"
- IDEM

## Description

This invention relates to the manufacture of moulded material-covered products.

In particular, the invention relates to apparatus for moulding foamable material in place on cover material to make a seat back component, a mould for moulding such products and a process for the manufacture of seat backs and like structures using the mould according to the preambles of the independent claims 1 and 7.

In known techniques of manufacture of "foam-in-place" products such as seat backs, material is placed over a mould and drawn into the mould by the application of vacuum. Foamable plastics is then introduced into the mould so that the plastics when cured adheres to the material in the mould. An example of such a process and apparatus for carrying out the process is described in published French patent application FR-A-2.280.491.

Published French patent application FR-A-2.578.189 describes a process for making a "foam-in-place" product in which a covering of fabric or PVC is turned inside-out and placed over a support, so that a sealing film can be applied to selected areas of the covering. The covering is then removed from the support, turned right side out and positioned in a mould before foamable plastics is introduced into the mould.

It is an object of this invention to provide an improved apparatus, mould and process for manufacturing a seat-back or the like such as e.g. to reduce the set-up time for the molding of such products.

In accordance with one aspect of the invention there is provided apparatus for moulding foamable material in place on cover material forming a bag-like structure to make a seat back component, said bag-like structure including front and back seat back panels interconnected along one end and opposite sides and open along an opposite end, characterised in that said apparatus comprising a tongue-like mould structure of a size and shape to extend within said bag-like structure through the open opposite end thereof; said tongue-like mould structure having a mould surface of a predetermined shape operable when a bag-like structure is mounted in inside-out relation over the tongue-like mould structure into an operative position to be confronted by the outside surface of the front seat back panel of the bag-like structure; a support structure and said tongue-like mould structure being mounted for relative movement with respect to one another between a mounting and dismounting position wherein said tongue-like mould structure is supported in cantilever fashion by said support structure so as to accommodate the mounting of the bag-like structure in inside-out relation over the tongue-like mould structure into said operative position and subsequent dismounting therefrom, and a moulding position wherein said tongue-like mould structure is supported by said support structure through the back seat back panel of said bag-like structure; a peripheral side wall mould structure mounted with respect to said tongue-like mould structure for relative movement between an inoperative position enabling said bag-like structure to be mounted in said operative position with respect to said tongue-like mould structure and to be dismounted therefrom and an operative position wherein said side wall mould structure extends from an inside surface of the front seat back panel along a periphery thereof; means including apertures extending to the mould surface of said tongue-like mould structure for creating vacuum pressure conditions between said mould surface and the front seat back panel of said bag-like structure while said side wall mould structure is in said operative position sufficient to conform the outside surface of the front seat back panel confronting said mould surface to the predetermined shape thereof; and a closure mould structure mounted for relative movement with respect to said peripheral side wall mould structure into an operative position wherein said closure mould structure cooperates with said side wall mould structure and the inside surface of a front seat back panel having its outside surface conforming in shape to the predetermined shape of the mould surface of said tongue-like mould structure to define a confined space within which a predetermined amount of foamable material is foamed in adhered relation to the inside surface of the front seat back panel of said bag-like structure.

In accordance with another aspect of the invention there is provided a mould for moulding products using a bag of material, said bag of material including front and back seat back panels interconnected along one end and opposite sides and open along an opposite end, characterised in that said mould comprising:
(a) a bottom separable into at least two components including:
   (i) a base, and
   (ii) a movable tongue which carries a design, said movable tongue being operable to receive a bag of material and to have the front panel of the bag of material conformed with the design carried by said movable tongue,
      said movable tongue being pivotable at one end to said base to enable said tongue to be pivoted between a position raised from the base for mounting and demounting the bag of material thereon and a moulding position wherein said movable tongue is operatively seated on said base through the back panel of the bag of material, and
(b) a side wall formation movable away from and towards the bottom to enable a body of foam material to be adhered to the bag of material in a manner to retain the design in the front panel thereof.

In accordance with a further aspect of the invention there is provided a process for the manufacture of seat backs and like structures using a bag-like cover member comprising a front seat back panel providing a first surface on one side thereof and a second surface on the other, and a back seat back panel joined to the front seat back panel to define a generally tubular shape having an open end and a closed end and inner and outer sides, characterised in that the process comprises the steps of telescoping said cover member in an inside-out condition onto a tongue-like mould structure comprising a vacuum tool having the complement of a predetermined shape on a face thereof; conforming and maintaining the first surface of said front seat back panel of said cover member to the predetermined shape of said face of said vacuum tool by applying a vacuum thereto; moulding an expandible liquid foaming material introduced to the second surface of the front seat back panel into a foam pad bonded to said second surface of said front seat back panel while the predetermined shape is maintained in said first surface thereof so as to insure that the predetermined shape is maintained in the first surface by the moulded foam pad when the cover member is removed from the tongue-like mould structure; removing said cover member with said foam pad bonded thereto from said tongue-like mould structure; and manipulating said cover member so that said first surface maintained in said predetermined shape by the moulded foam pad faces out and said second surface with said foam pad bonded thereto is enclosed therein to thereby enable the seat back to be completed by moving the cover member with the foam pad bonded thereto over a seat back frame.

In one embodiment of the invention the bag comprises a piece of material making up the "A surface" of the seat back (the back of which is the "B surface"). The material comprising the "A" and "B surfaces" is secured at its side edges to material for enclosing the bag to form the sides and back of the seat back. "Stops" (eg. seams) may also be provided on the bag. Thereafter the bag is turned "inside-out" and mounted on the tongue (with the tongue moved to a raised position) with the "A surface" on the surface of the tongue of the mould carrying the design. Thereafter the tongue is lowered onto the base, the side wall formation lowered onto the "B surface" (with the position of securing of the sides (carrying the "stop") to the material carrying the "A" and "B surfaces" to the side edges being outside the side wall formation), the material carrying the "A and B surfaces" is drawn into the mould until the "stop" engages the side wall formation by being "blown up" then positioned by vacuum or mechanical means, or just positioned by mechanical means or vacuum, the side wall formation fully lowered towards the bottom, the mould closed and then foam thermoplastic material introduced into the mould for curing and securing to the "B surface". Thereafter the mould is opened, the tongue elevated, the sack or bag removed and the bag turned to present the "A surface" on the outside. It will be appreciated that no cured foamed thermoplastic material becomes secured to any other surface.

Where mechanical means (for example a plug) are used to mechanically position the material against the design surface on the bottom of the mould, the plug may be segmented with each segment operable individually (independent of the others) in the mould on the materials. The segmented sections of the plug are employed preferably sequentially. Normally the center segmented sections are applied first. The sections are thus applied from the center radially outwardly to the edges.

Further features of the invention are defined in the dependent claims.

The invention will now be illustrated with reference to the accompanying drawings, in which:-
Figure 1 is a perspective view of a car seat which may be constructed using the apparatus and process of the invention,
Figure 2 is a section through a portion of a seat cushion of the car seat,
Figure 3 is a top view of a mould, a slip ring situated about its periphery into which mould a piece of material has been drawn,
Figure 4 is a side sectional view of part of the mould and slip ring,
Figures 5, 5A, 6, 6A and 7 illustrate schematically the process used to carry out one process of drawing material into the mould,
Figures 8, 9, 10 and 11 illustrate permanently affixed "stops" secured to the material to be used in the manufacture of the finished product,
Figures 12, 13 and 14 illustrate another embodiment uesd to comprise the "stop" disposed at intervals on the material for engaging the slip ring,
Figure 15 is a perspective view of a typical prior art mould used to manufacture cushion bottoms or seat bottoms,
Figure 16 is a cross-sectional view taken through the mould configuration shown in Figure 15 in use,
Figure 17 is a seat bottom manufactured using the prior art mould,
Figure 18 illustrates the seat bottom or cushion in Figure 17 having been trimmed and to which has been applied side skirts,
Figure 19 illustrates a segmented mechanical device for positioning material on the bottom of a mould illustrating the operation of one segment of a mechanical device which may be used in the apparatus and process of the invention,
Figure 20 illustrates the operation of other segments of the mechanical device used to position the material in Figure 19,
Figure 21 (shown with Figure 28) illustrates the shell covering of a seat cushion turned "inside-out" according to the invention,
Figure 22 is a section along line 22/22 of Figure 21 illustrating the fastening of two sheets of material together to form the shell covering of Figure 21,
Figures 23 through 28, inclusive, illustrate:
   (a) a new mould used to manufacture seat cushions, and
   (b) a process of manufacturing an improved seat cushion or seat bottom,
Figure 28A illustrates the moulded product removed from the mould in Figure 28 prior to manipulating the side edges or skirts of material to provide the completed product,
Figure 29 is a section along the line 29/29 in Figure 28 with one of the side edges or skirts being moved into the position they will occupy in the finished product,
Figure 30 is an exploded perspective of apparatus according to the invention illustrating the use thereof to form a seat back of a car vehicle,
Figure 31 is a cross-sectional view taken through the apparatus shown in Figure 30 in use,
Figure 32 illustrates the moulded seat back produced from carrying out a process of manufacture using the apparatus shown in Figures 30 and 31, and
Figure 33 illustrates the reversing of the product shown in Figure 32 to bring the exterior surface of the sack to the outside.

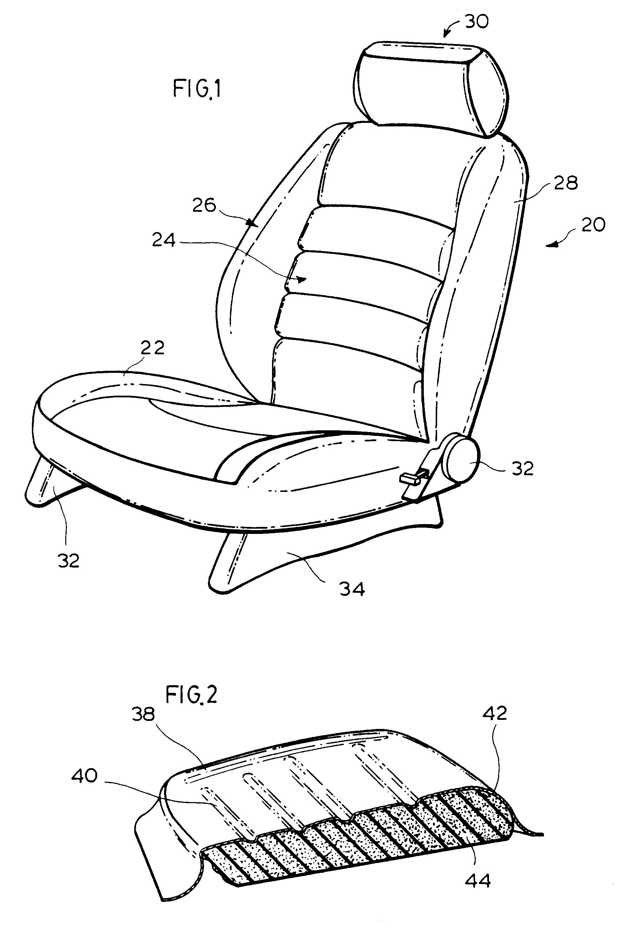

With reference to Figure 1 there is shown car seat 20 comprising seat cushion 22, seat back 24 with bolsters 26 and 28 and head rest 30. Seat back 24 is pivotable by mechanism 32 at the side of the seat 20 with respect to seat cushion 22. Seat cushion 22 is mounted on base supports 32 and 34.

With reference to Figure 2 there is shown a cross-section through a seat cushion 38 before assembly into seat 20, the seat cushion comprising contour lines 40 and comprising fabric material 42 impervious to the passage of foam material therethrough (which polyurethane foam 44 has been secured to material 42 by injection moulding of the foam material 44 into a mould (not shown). The peripheral edges of the material 42 after removal of the seat cushion 38 from the mould are then secured to seat 20 to form the side facing of the seat cushion 38.

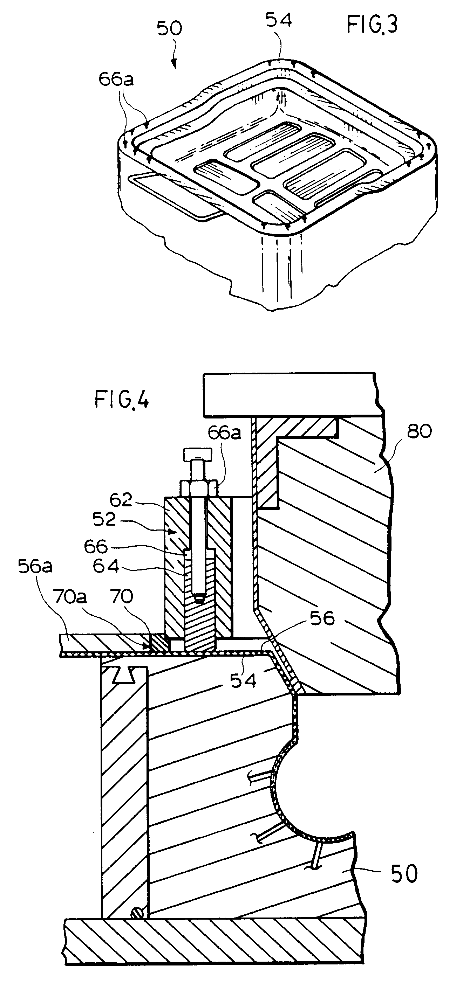

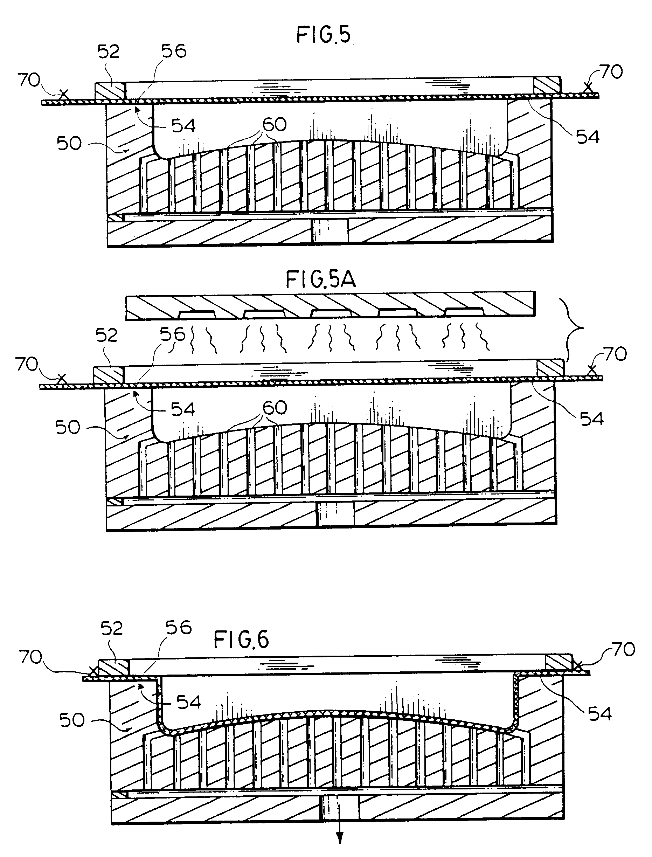

With reference to Figures 3 to 7 inclusive, there is shown a mould 50 surrounded by continuous slip ring 52. Mould 50 comprises flat peripheral surface 54 over which the bottom of slip ring 52 sits. Fabric material 56 passes between slip ring 52 and surface 54 for extending across mould 50 (see Figure 5). Mould 50 comprises channels 60 for the suction of air therethrough from the space between the material (which is also impervious to the passage of air therethrough) for drawing material 56 to the surface of the mould 50 to conform to the surface.

With reference to Figure 4, slip ring 52 comprises continuous metal frame 62 carrying plastic foot element 64 extending from a downwardly directed channel 66 in frame 62. Plastic foot member 64 is secured by allen bolts 66 through frame 62 to permit the relative positioning of the portion of plastic foot element 64 controlled by individual allen bolts 66a. Thus at predetermined intervals (see Figure 3) allen bolts 66a can be raised or lowered, raising or lowering the plastic foot element 66 to the appropriate position.

With reference to Figure 5, material 56 is positioned across mould 50 with slip ring 52 appropriately positioned on material 56.

With respect to vinyl material, the material as opposed to ordinary fabric, should be heated prior to being drawn into the mould - see Figure 5A.

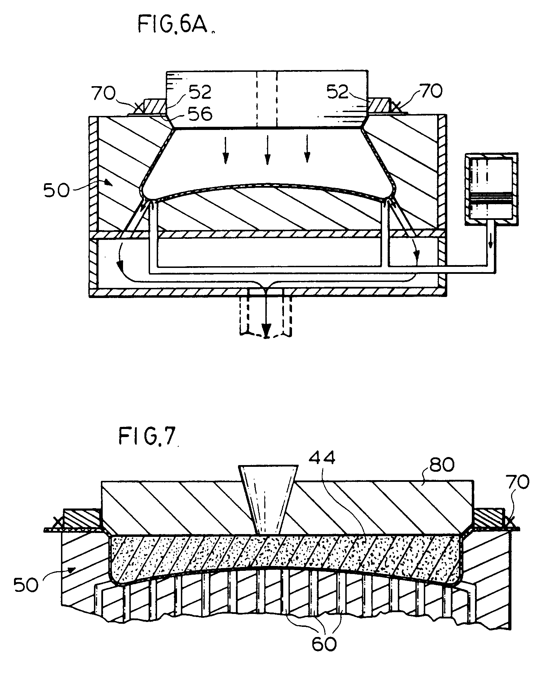

With reference to Figure 6 the material is drawn into the mould until stops shown as "X's" 70 in Figure 5, are drawn to engage slip ring 52 and cannot pass between the space between peripheral surface 54 and plastic foot element 64. Thus, material drawn into the mould, is now stretched to conform to the inner surface of the mould.

With respect to Figure 4, stop 70 comprises an additional thickness of material 56A sewn onto material 56 to preclude passage of any further material into the mould. In this regard, a seam 70A is provided for joining the two sheets of material 56 and 56A. Thereafter, the mould cover 80 (see Figures 4 and 7) is closed onto the mould, sealing the mould, and polyurethane foam, for example, is injected into the mould, as in Figure 7, filling the mould. As is apparent, each of the sheets of material 56 may carry stops in the identical position and when the material 56 has been positioned over the mould as in Figure 5 and slip ring 52 appropriately positioned, the stops would be appropriately positioned as shown in Figure 5 and would be drawn towards the slip ring 52 as material 56 is drawn into the mould until the stop engages the slip ring.

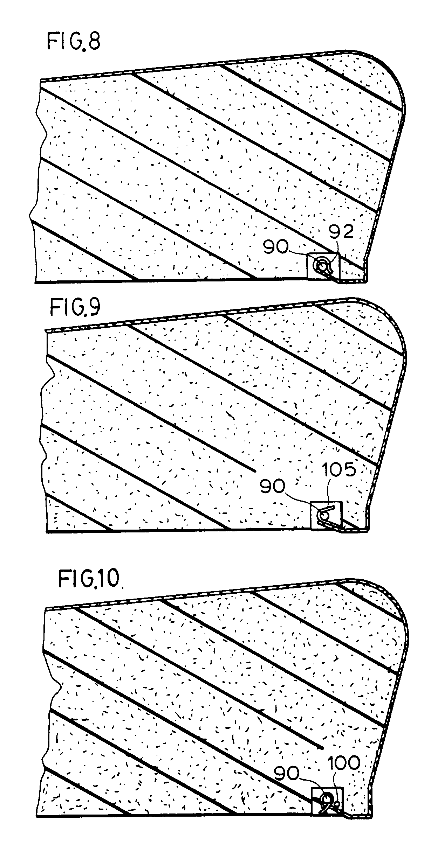

Thereafter, stretching of the material 56 occurs. The position of the "stop" 70 is chosen so that no wrinkles are in the material and no thin spots of material occur in the mould 50 when material 56 conforms in the mould surface. As previously indicated, the stop may comprise an extra thickness of material (see Figure 4). It may also comprise the end of the material 56 being bent over and sewn with wire 90 sewn within the pocket at the periphery thereof as at 92 (see Figure 8).

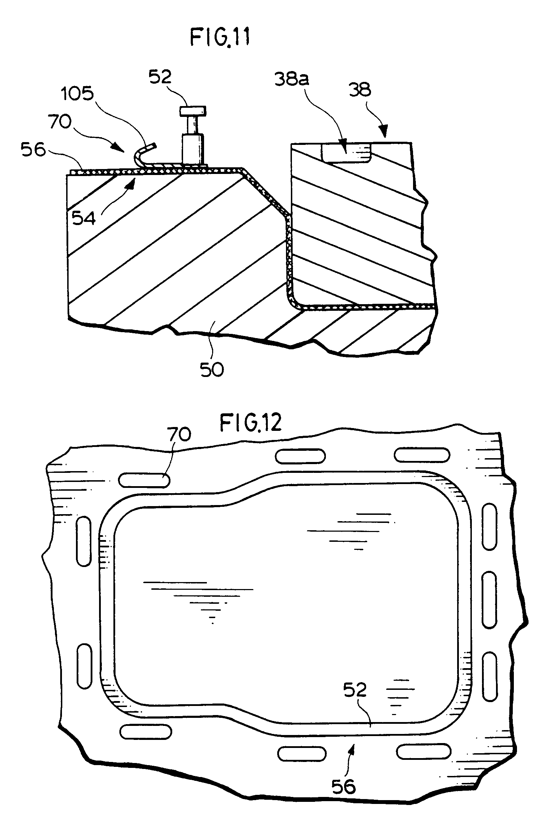

A series of J-strips 105 may also be provided at intervals proximate the edges of the fabric, for example, which would act as a "stop" for engaging slip ring 52 round the slip ring (see Figure 9). "Stop" 70 may also comprise raised seam 100 shown in Figure 10.

With reference to Figures 9 and 11, strips 105 ("stop" 70) engages slip ring 52 for precluding material 56 from passing further into the mould between the foot 64 and peripheral surface 54 of mould 50 when seat cushion 38 was moulded. Each J-strip 105 is then carried in recess 38 for securing the material side facing to the bottom of cushion 38 (see Figure 11). The J-strip may be provided at intervals about fabric 56. In this regard, see Figure 12 where stops 70 are provided at predetermined intervals on fabric 56 spaced from slip ring 52.

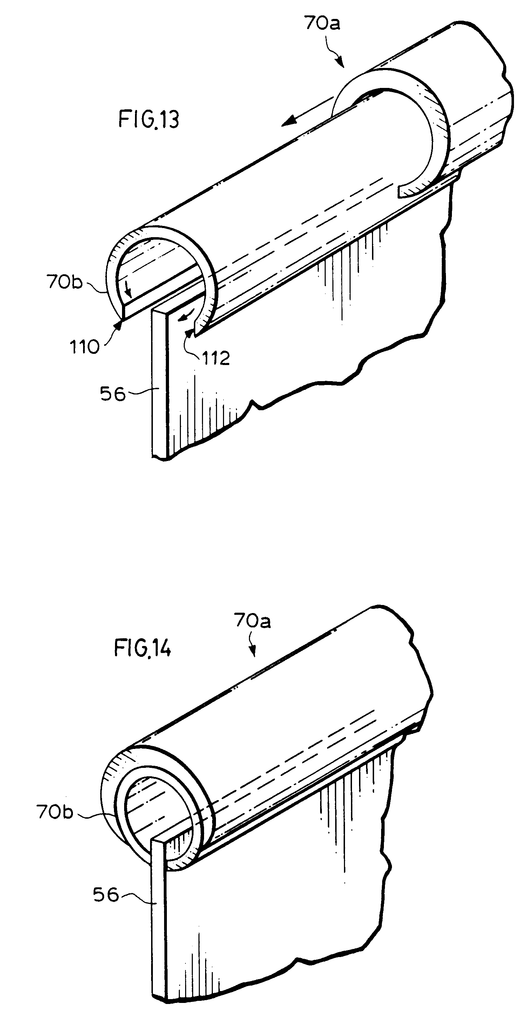

The stops may also comprise clips 70A which may be disposed about the fabric as in Figure 12 and may comprise a clip comprising two C-section portions, an inner (70B) and an outer (70C) section. The inner section 70B is made of plastics material which can be compressed to force tips 110 and 112 towards one another to grip fabric 56 at the edge thereof. For locking the interior member 70B to clip the ends 110 and 112 to grip the material as shown in Figure 14 an outer C-shaped structure 70C is shown which slides longitudinally from one end of the exterior of structure 70B over the structure 70B, forcing the two edges 110 and 112 inwardly. By clipping the material in this manner at predetermined intervals as shown in Figure 12, stops 70 have been provided at intervals which when they engage slip ring 52, stop the ingress of material into mould 50. Thereafter only material which has already been drawn into mould 50 will stretch to conform to the configuration of the mould surface. After injection moulding of the polyurethane foam, for example, to the mould and the product finished, the top of the mould is lifted, the product removed and the removeably securable clips or "stops" are removed.

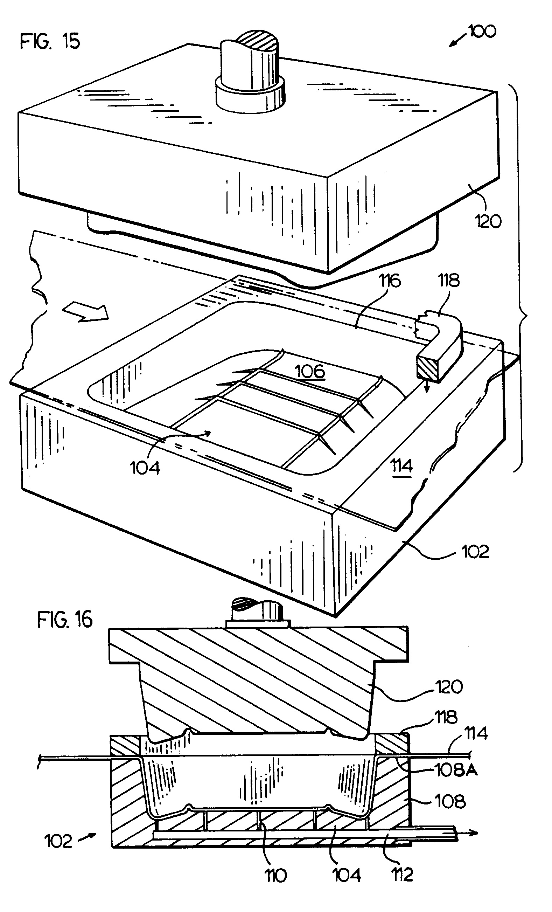

With reference to Figure 15 there is shown a mould carrying a moulding cavity known in the prior art, the mould being identified generally as 100 comprising base 102 carrying moulding cavity generally identified as 104 carrying mould bottom 106 carrying the design to be carried by the upper surface of the seat bottom and integral upstanding side wall formation 108 integrally formed with bottom 106 making up base 102. Apertures 110 extend through bottom surface 106 and are connected to conduit 112 leading to a vacuum pump for drawing air in the direction shown in Figure 16 from conduit 112. Sheet of material 114 is placed over the mouth 116 of cavity 104 and slip ring 118 is brought downwardly to sit on material 114 and clamp same (see Figure 16). Integral mechanical device 120 is provided for assisting to depress the sheet of material 114 into the mould cavity 104 and assist to cause sheet of material 114 to be positioned to conform to the design carried by bottom 106 (see Figure 16). This may also be accomplished with a source of vacuum. However as is apparent when the material 114 is drawn into the mould by the source of vacuum or the mechanical device 120 or both, material 114 will be drawn between the upper surface 108A of side wall 108 and slip ring 118 if the clamping action of the slip ring 118 is not sufficient to hold the material thus permitting excess material to enter the mould. On the other hand if the slip ring 118 is clamped tightly onto the material so that the material 114 is unable to move between the slip ring 118 and the upper surface 108A of side wall 108 into mould cavity 104, then the material stretches as it is being drawn into the cavity to conform to the design on bottom 106 by the mechanical device 120, and/or by the vacuum drawing the material to bottom 106 to conform to the design, the material stretches and thin spots can be the result.

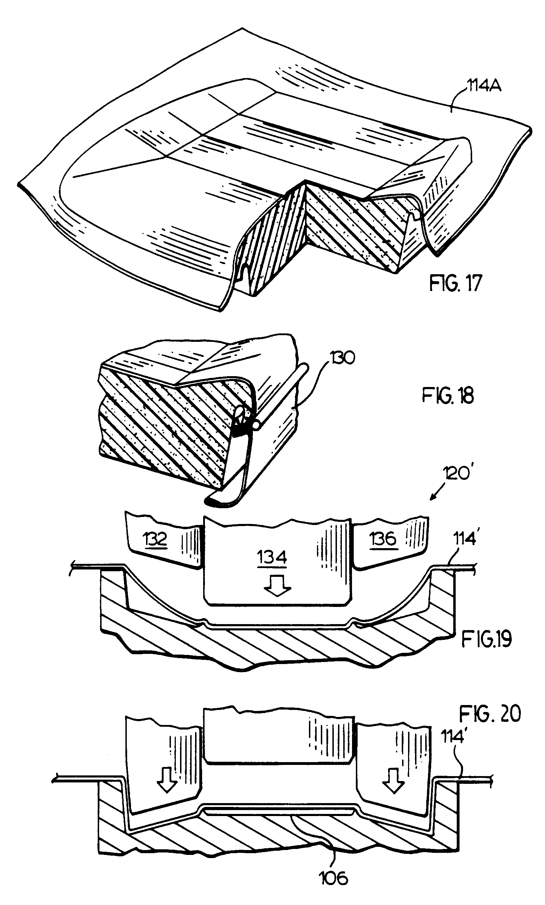

With reference to Figures 17 and 18 and having regard to the construction of the mould of the prior art shown in Figures 15 and 16, it is apparent that when sheet material 114 is positioned within the mould in cavity 104 foamable thermoplastics material may be injected into the moulding cavity 104 (not shown) and will be caused to adhere to the material 114 extending across the bottom surface 106 and up the side walls 108 unless any such surface was coated with a material which did not permit the foamed thermoplastic material to adhere to the side wall. When the product is removed from the mould, excess material comprising peripheral flange 114A must be removed and side skirts 130 must be secured to the cushion to finish the product. In the cushion shown in Figures 17 and 18 the side wall or skirts of the seat cushion are not attached to the foamed thermoplastic material. Thus they do not suffer from the same buckling forces on the foam which over a prolonged period will tend to cause crease lines to develop in the side walls of the seat cushion. However additional costs arise from the additional labour required for trimming the excess material off the seat cushion and sewing the side walls or skirts onto the seat cushion.

With reference to Figure 16 mechanical device 120 for positioning the sheet of material 114 with the mould is an integral one-piece device.

According to one embodiment of the invention Applicant provides in Figures 19 and 20 a mechanical device or plug 120¹ which is segmented to provide portions 132, 134 and 136. Each of segments 130, 132 and 134 is operable independently from the others. Thus a sequence can be set up as shown in Figure 19, first applying the central segment 34 to the material (when the mould bottom is concave in shape) and thereafter applying the peripheral segments 132 and 136 to the material to cause the sheet 114¹ to conform to the design on the bottom 106 of the mould. In Figure 19 the center of the material 114¹ has been acted upon by segment 134. In Figure 20 segments 132 and 136 have acted upon material 114 first because the mould bottom is convex. Thereafter central segment 134 may then be applied.

Normally the sections or segments of device 120¹ are applied from the center radially outwards towards the edges, i.e. segmented section 134 and subsequently peripheral edge sections 132 and 136.

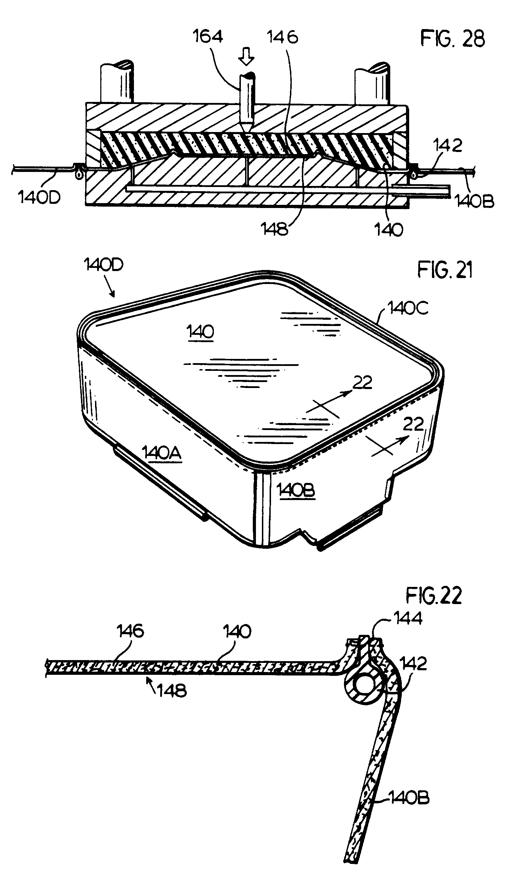

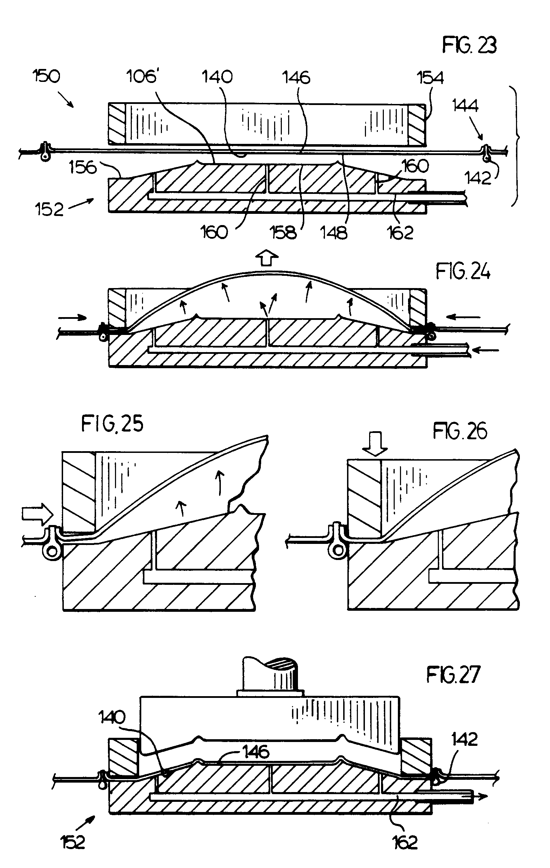

With reference to Figures 23 to 28 inclusive a new mould construction is shown to illustrate the manufacture of a seat bottom or seat cushion using the material shell shown in Figure 21 which has been turned "inside-out" shown in part in Figure 22.

With reference to Figure 21 there is shown shell comprising sheet of material 140 which is to comprise the bottom surface of the cushion on which a person is to be seated sewn at 144 to four separate side skirt or side wall portions 140A, 140B, 140C and 140D, employing a welting shown as 142 in Figure 22. Surface 146 of material 140 will be the surface to which the foamable thermoplastics material will be applied or bonded during the process of manufacture whereas surface 148 will be the outer surface of the finished product when the product is completed. Thus it is clear that the shell made up of all the material components 140 and 140A through 140D inclusive sewn together carrying welting 142 (which will also act as the "stop") is used in its reversed (turned "inside-out") condition as shown in Figure 21 and the shell of material will be inserted onto the mould bottom 106¹ shown in Figures 23 through 28 inclusive in the "inside-out" condition.

With reference to Figure 23 an improved mould 150 is provided according to an embodiment of the invention for moulding the finished seat product and like products, the mould comprising a bottom 152 and continuous side wall formation 154 separated from bottom 152 (and not integrally attached as in Figures 15 and 16). Thus if side wall formation 154 is brought onto ledge 156 at the periphery of bottom 152, it will form a two-piece moulding cavity to which foamed thermoplastic material can be injected. The benefits of this mould construction will be seen when describing a process of manufacture used to produce the finished seat bottom. In this regard bottom 152 carries a centrally disposed upper bottom surface 106¹ carrying the design which the seat cushion is to carry and carrying apertures 160 therethrough leading to conduit 162 which may be connected to a source of gas or a source of vacuum.

With reference to Figure 23 it is clear that side wall formation 154 doubles not only as a side wall for the mould but also the slip ring which has now been dispensed with.

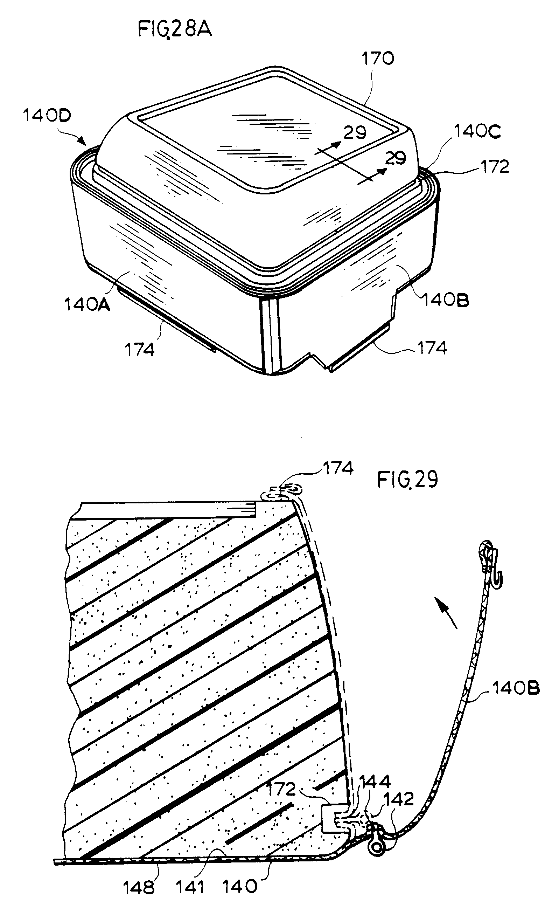

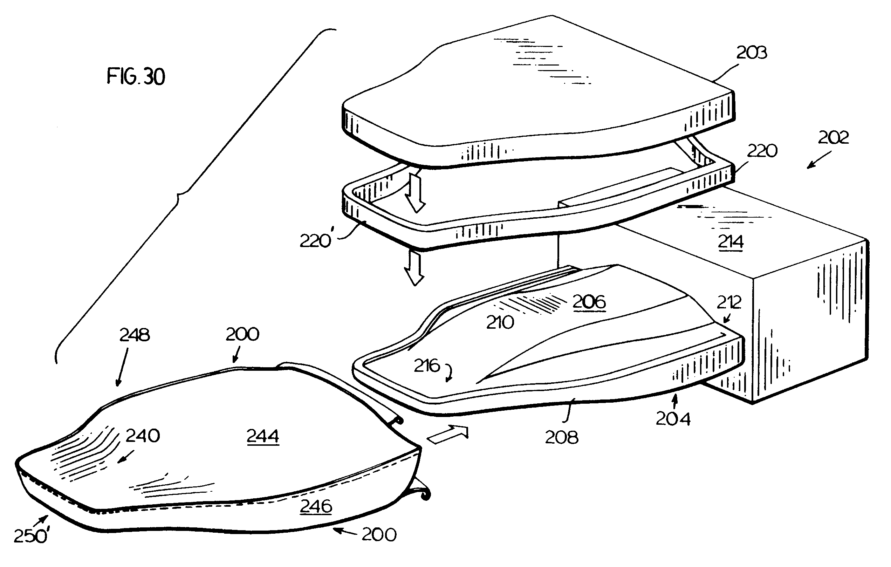

With reference to Figure 23 and Figures 21 and 22 it is clear that sheet of material 140 to comprise the bottom is applied to the bottom so that inside surface 146 is directed upwardly and will be the surface to which the foamed thermoplastic material is cured and outer surface 148 will engage bottom surface 106¹ to which the design to be carried by the finished seat product is disposed. Thus it is clear that the structure shown in Figure 21 with the welting 142 acting as a stop is inserted "inside-out". When side wall formation 154 is brought down towards ledge 156 of bottom 152, it exerts a downward pressure on the material as shown in Figure 24. Thereafter as air, for example, is fed through conduit 162 through apertures 160 into the space between a sheet of material 140 which will form the seat bottom on which a person will sit when the product is completed and the bottom 106¹ causing the material to be "blown up" (see Figure 24) drawing the material into the cavity formed by the bottom of surface 106¹ and inside side walls of side wall formation 154 causing welting 142 to engage the side wall formation 154 and bottom 152 and be unable to pass between the space between surface 156 of bottom 152 and the lower edge of side wall formation 154 (see Figures 24 and 25). Where the same size structure shown in Figure 21 is duplicated continuously, it is clear that the stops 142 will act to not permit more than the same amount of material to enter into the moulding cavity in each operation. Thereafter side wall formation 154 is lowered further so as to clamp material 140 in position (see Figure 26) and the vacuum pump is then activated to withdraw the air between surface 106¹ and material 140 to cause material 140 to conform to the design on bottom surface 106¹ (see Figure 27). A mechanical device such as that shown in Figures 19 and 20 may be also used to position the fabric as shown in Figure 27. Thereafter foamable thermoplastic material may be injected into the mould via conduit 164 which adheres to fabric material 140 shown in Figure 28 which is not permeable to the passage of foam therethrough. In some cases the material may be permeable to such foam material in which event the foamable thermoplastics material is of the type which cures very rapidly and quickly so that it cures before penetrating through the material 140. In any event after curing of the foamed material the product is removed in the configuration shown in Figure 28. The foamed material 170 carries a groove about the periphery thereof for receipt of the welting and seam 142, 144 (see Figure 29). With reference to Figure 28 it is clear that the side wall or skirts are spaced from the foamed cured thermoplastics material 170 and with the surface 148 on the side of material 140 opposite foamed material 170. Thus to complete the manufacturing process the side edges or skirts 140A through 140D inclusive are pulled down over the foam portion 170 (in this regard see Figure 29), the edges of which are secured on the under side of the foam 170 by clips 174 (see Figure 29) in use. It is also clear from Figure 29 that groove 172 when skirt 140B is pulled down over foam block 170 receives welting 142 and seam 144. It is clear that the process of manufacture as taught by Applicant permits the manufacture of a seat bottom without the inside surfaces of the side skirts or side edges having to receive an application of a coating to preclude the curing of foamed thermoplastic material thereto. Thus it is clear that by this simple procedure using the proposed mould construction as proposed by Applicant that a simple process of manufacture is provided.

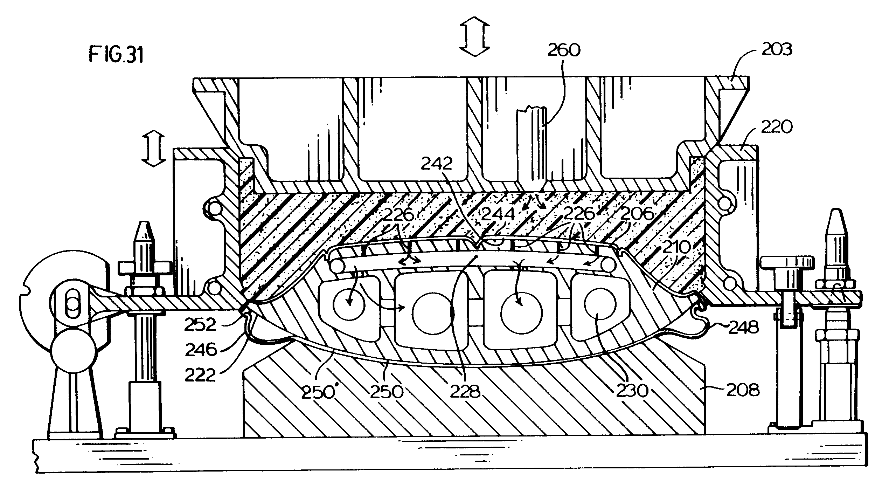

With reference to Figures 30 and 31 there is shown an improved mould for moulding products using a "bag" or "sack" of material, as for example a seat back, shown as 200 in Figure 30. The mould 202 comprising a bottom 204 which carries on the upper surface 206 the design which is to be carried by the outer surface of the bag or sack, the bottom 204 being separable into two components, a base 208 and pivotable tongue 210 pivotable at end 212 relative to bottom 208 in support 214. Tongue 210 is pivotable from a position engaging bottom 208 (shown in Figures 30 and 31) to a position where end 216 is elevated from base 208 to permit sack 200 to be inserted thereon. Mould 202 also includes side wall formation 220 movable away from and towards bottom 204. Bottom 204 is undercut at 222 for the purpose of better cooperation and engaging with the lower end of side wall formation 220. Tongue 210 also carries internally pipes and conduits under surface 206 for being secured to a gas pump for the feeding of gases through apertures 226 through surface 206 and for being connected to a vacuum pump for withdrawing air from the interior of the moulding cavity through apertures 226 through the conduits shown in Figure 31. In this regard apertures 226 are in communication with collection conduits 228 which are in communication with larger conduits.

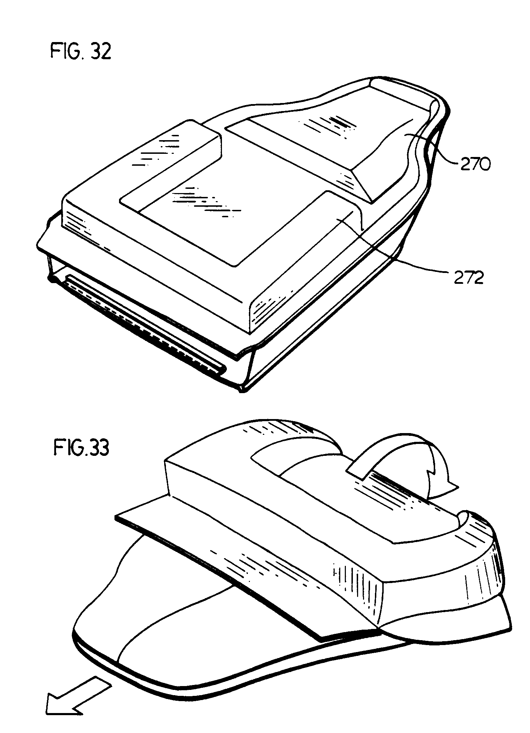

With reference to "bag" or "sack" 200, the "bag" or "sack" comprises a piece of material 240 making up the "A surface" 242 of the seat back (see Figure 31), the back of which is the "B surface" 244. Material sheet 240 comprising surfaces 242 and 244 is secured at its side edges to material for enclosing the "bag" or "sack" to form the sides 246 and 248 and back 250 of the "bag" or "sack". "Stops" 252 (see Figure 31) are provided in the form of welting sewn between the peripheral edges of material 240 and the portions making up the side edges and back 246, 248 and 250. In this case portions 246, 248 and 250 comprise a single sheet of material and thus sections 246, 248 and 250 represent portions of the larger sheet 250¹. After manufacture of the "bag" or "sack" 200, the "bag" is turned "inside-out" as shown in Figures 30 and 32, tongue 210 is elevated by pivoting relative to support 214 and the "bag" is slid thereover. Tongue 210 is then returned to the position shown in Figure 31 with sheet portion 250 of material 250¹ clamped between the base 208 and tongue 210. Side wall 220 is thereafter brought down to the position shown in Figure 31 and a process very much like the process shown in Figures 24 and 28 inclusive is carried out. Particularly, material 240 is "blown up" with air introduced from an air pump through apertures 226 to draw "stops" 252 to the position shown in Figure 31 being unable to pass between side wall 220 and the peripheral edge of tongue 210 as shown in Figure 21. Thereafter, the vacuum pump (not shown) is activated to withdraw the air from the space between the tongue 210 and material 240 drawing the material to surface 206 of the tongue in intimate contact therewith to conform to the design carried by the tongue on the surface 206. A mechanical device for positioning the material shown in Figures 19 and 20 may also be used employing individually operable segments. The side wall formation is then lowered to clamp sheet 240 in a like manner as sheet 140 was clamped as shown in Figure 26. Thereafter top 203 of the mould is applied to the side walls and foamable thermoplastics material is injected through injection nozzle 260 to form the finished product.

With reference to Figure 31 appropriate alignment and locking devices are shown for aligning and closing the components relative to one another.

After completing the moulding process, the top 203 is elevated, the side walls elevated, the tongue pivoted at end 212 relative to support 214 and the "sack" now bearing the foamed thermoplastic material in accordance with the configuration of the moulding cavity is removed from the tongue. The finished product may be as shown in Figure 32 ("inside-out") and which carries foamed thermoplastic material at 270 and 272 on the "B surface" 244.

With reference to Figure 33 the "sack" is turned "right side out" as shown in Figure 33 ready for mounting and use.

## Claims

1. Apparatus for moulding foamable material in place on cover material forming a bag-like structure to make a seat back component, said bag-like structure (200) including front and back seat back panels (240,250) interconnected along one end and opposite sides and open along an opposite end, characterised in that said apparatus comprising
a tongue-like mould structure (210) of a size and shape to extend within said bag-like structure (200) through the open opposite end thereof,
said tongue-like mould structure (210) having a mould surface (206) of a predetermined shape operable when a bag-like structure (200) is mounted in inside-out relation over the tongue-like mould structure (210) into an operative position to be confronted by the outside surface (242) of the front seat back panel (240) of the bag-like structure (200),
a support structure (208) and said tongue-like mould structure (210) being mounted for relative movement with respect to one another between (1) a mounting and dismounting position wherein said tongue-like mould structure (210) is supported in cantilever fashion by said support structure (208) so as to accommodate the mounting of the bag-like structure (200) in inside-out relation over the tongue-like mould structure (200) into said operative position and subsequent dismounting therefrom, and (2) a moulding position wherein said tongue-like mould structure (200) is supported by said support structure (208) through the back seat back panel (250) of said bag-like structure (200),
a peripheral side wall mould structure (220) mounted with respect to said tongue-like mould structure (210) for relative movement between (1) an inoperative position enabling said bag-like structure (200) to be mounted in said operative position with respect to said tongue-like mould structure (210) and to be dismounted therefrom and (2) an operative position wherein said side wall mould structure (220) extends from an inside surface (244) of the front seat back panel (240) along a periphery thereof,
means including apertures (226) extending to the mould surface (206) of said tongue-like mould structure (210) for creating vacuum pressure conditions between said mould surface (206) and the front seat back panel (240) of said bag-like structure (200) while said side wall mould structure (220) is in said operative position sufficient to conform the outside surface (242) of the front seat back panel (240) confronting said mould surface (206) to the predetermined shape thereof, and
a closure mould structure (203) mounted for relative movement with respect to said peripheral side wall mould structure (220) into an operative position wherein said closure mould structure (203) cooperates with said side wall mould structure (220) and the inside surface (244) of a front seat back panel (240) having its outside surface (242) conforming in shape to the predetermined shape of the mould surface (206) of said tongue-like mould structure (210) to define a confined space within which a predetermined amount of foamable material is foamed in adhered relation to the inside surface (244) of the front seat back panel (240) of said bag-like structure (200).

2. Apparatus as claimed in claim 1 wherein said tongue-like mould structure (210) is pivoted at one end to said support structure (208) and said mounting and dismounting position is a raised position of said tongue-like mould (210) structure with respect to said support structure (208).

3. Apparatus as claimed in claim 1 or claim 2 wherein said tongue-like mould structure (210) and said support structure (208) are configured such that when said tongue-like mould structure (210) is in said moulding position and a bag-like structure (200) in inside-out relation is mounted in operative position over the tongue-like mould structure (210) with the front seat back panel (240) of the bag-like structure (200) confronting the mould surface (206) of said tongue-like mould structure (210) a portion of the bag-like structure (200) exterior of the periphery of said front back seat panel (240) is unconfined.

4. A mould for moulding products using a bag (200) of material, said bag of material including front and back seat back panels (240,250) interconnected along one end and opposite sides and open along an opposite end, characterised in that said mould comprising:
(a) a bottom (204) separable into at least two components including:
(i) a base (208), and
(ii) a movable tongue (210) which carries a design, said movable tongue (210) being operable to receive a bag (200) of material and to have the front panel (240) of the bag of material conformed with the design carried by said movable tongue,
said movable tongue (210) being pivotable at one end to said base (208) to enable said tongue (210) to be pivoted between a position raised from the base (208) for mounting and demounting the bag (200) of material thereon and a moulding position wherein said movable tongue (210) is operatively seated on said base (208) through the back panel (250) of the bag (200) of material, and
(b) a side wall formation (220) movable away from and towards the bottom (204) to enable a body of foam material to be adhered to the bag (200) of material in a manner to retain the design in the front panel (240) thereof.

5. The mould of claim 4 wherein the bottom (204) is undercut at its periphery (222) for the purpose of cooperating with the lower end of the side wall formation (220) to engage the bag (200) of material therebetween.

6. The mould of claim 4 or claim 5 wherein the tongue (210) also carries apertures (226) for being secured to a source of vacuum.

7. A process for the manufacture of seat backs and like structures using a bag-like cover member (200) comprising a front seat back panel (240) providing a first surface (242) on one side thereof and a second surface (244) on the other, and a back seat back panel (250) joined to the front seat back panel (240) to define a generally tubular shape having an open end and a closed end and inner and outer sides, characterised in that the process comprises the steps of:
telescoping said cover member (200) in an inside-out condition onto a tongue-like mould structure comprising a vacuum tool (210) having the complement of a predetermined shape on a face (206) thereof;
conforming and maintaining the first surface (242) of said front seat back panel (240) of said cover member (200) to the predetermined shape of said face (206) of said vacuum tool (210) by applying a vacuum thereto;
moulding an expandible liquid foaming material introduced to the second surface (244) of the front seat back panel (240) into a foam pad (270,272) bonded to said second surface (244) of said front seat back panel (240) while the predetermined shape is maintained in said first surface (242) thereof so as to insure that the predetermined shape is maintained in the first surface (242) by the moulded foam pad (270,272) when the cover member (200) is removed from the tongue-like mould structure (210);
removing said cover member (200) with said foam pad (270,272) bonded thereto from said tongue-like mould structure (210); and
manipulating said cover member (200) so that said first surface (242) maintained in said predetermined shape by the moulded foam pad (270,272) faces out and said second surface (244) with said foam pad (270,272) bonded thereto is enclosed therein to thereby enable the seat back to be completed by moving the cover member (200) with the foam pad (270,272) bonded thereto over a seat back frame.

8. The process as claimed in Claim 7 wherein said first surface (242) of said front seat back panel (240) is conformed to the predetermined shape by the application of vacuum to said vacuum tool (210) and by moving a plunger (120') into engagement with said second surface (244) thereof and then moving the plunger (120') out of engagement with said second surface (244) prior to the introduction of the expandable liquid foaming material thereon to allow the application of vacuum to maintain said first surface (242) in the predetermined shape until such maintenance is assumed by the molded foam pad (270,272).

9. The process as claimed in Claim 8, wherein the back seat back panel (250) of the cover member (200) is joined to the front seat back panel (240) through side edge panels (246,248).

10. The process as claimed in Claim 7, using a mould comprising a base (208), a movable tongue (210) forming said vacuum tool, said movable tongue (210) being pivotable at one end to said base (208) to enable said tongue (210) to be pivoted between a position raised from the base (208) for mounting and demounting said bag-like cover member (200) and a moulding position wherein said movable tongue (210) is operatively seated on said base (208) through the back seat back panel (250) of the cover member (200), and a side wall formation (220) movable away from and towards the base (208) and movable tongue (210), and wherein the process further comprises:
moving the tongue (210) to its raised position before telescoping said cover member (200) in the inside-out condition onto the tongue (210);
lowering the tongue (210) onto the base (208);
lowering the side wall formation (220);
drawing the material of the cover member (200) into the mould thereby to conform said first surface (242) to the predetermined shape on said face (206) of the tongue (210);
fully lowering the side wall formation (220) onto the tongue (210) and base (208);
closing the mould and introducing foamable material into the mould to effect said step of moulding said foam pad (270,272); and
opening the mould and elevating the tongue (210) before said step of removing the cover member (200).

## Patentansprüche

1. Vorrichtung für das Formen von schäumbarem Material an Ort und Stelle auf Überzugsmaterial, das eine sackähnliche Konstruktion bildet, um eine Sitzlehnenkomponente zu bilden, wobei diese sackähnliche Konstruktion (200) eine vordere und eine hintere Sitzlehnenbahn (240, 250) beinhaltet, die entlang eines Endes und gegenüberliegender Seiten miteinander verbunden sind und sich entlang eines gegenüberliegenden Endes öffnen, **dadurch gekennzeichnet,** daß diese Vorrichtung umfaßt:
eine zungenähnliche Formkonstruktion (210), die eine Formfläche gegebener Gestalt hat, die betätigbar ist, wenn eine sackähnliche Konstruktion (200) mit der Innenseite nach außen über der zungenähnlichen Konstruktion (210) in eine Arbeitsstellung montiert wird, um die Außenseite (242) der vorderen Sitzlehnenbahn (240) der sackähnlichen Konstruktion (200) in Gegenüberstellung zu bringen;
eine Tragkonstruktion (208), wobei die zungenähnliche Formkonstruktion (210) für eine gegenseitige relative Bewegung zwischen (1) einer Montage- und einer Demontagestellung montiert wird, wobei die zungenähnliche Formkonstruktion (210) in Kragarmform durch die Tragkonstruktion (208) so getragen wird, daß die Montage der sackähnlichen Konstruktion (200) mit der Innenseite nach außen über die zungenähnliche Formkonstruktion (210) in die Arbeitsstellung und ein anschließendes Demontieren davon aufgenommen wird, und (2) einer Formstellung montiert wird, wobei die zungenähnliche Formkonstruktion (210) von der Tragkonstruktion (208) durch die hintere Sitzlehnenbahn (250) der sackähnlichen Formkonstruktion (200) getragen wird;
eine Umfangsseitenwand-Formkonstruktion (220), die bezüglich der zungenähnlichen Formkonstruktion (210) für eine relative Bewegung zwischen (1) einer Nichtarbeitsstellung, in der man die sackähnliche Konstruktion (200) in der Arbeitsstellung davon bezogen auf die zungenähnliche Formkonstruktion (210) montieren und davon demontieren kann und (2) einer Arbeitsstellung montiert ist, wobei sich die Seitenwand-Formkonstruktion (220) von einer Innenseite der vorderen Sitzlehnenbahn (240) entlang des Umfangs davon erstreckt;
Mittel, die Öffnungen (226) einschließen, die sich bis zur Formfläche (206) der zungenähnlichen Formkonstruktion (210) erstrecken, um Unterdruckbedingungen zwischen der Formfläche (206) und der vorderen Sitzlehnenbahn (240) der sackähnlichen Konstruktion (200) zu schaffen, während die Seitenwand-Formkonstruktion (220) sich in ihrer Arbeitsstellung befindet, die ausreichen, um die Außenseite (242) der vorderen Sitzlehnenbahn (240), die der Formfläche (206) gegenüberliegt, mit einer vorbestimmten Gestalt in Übereinstimmung zu bringen; und
eine Schließformkonstruktion (203), die für eine relative Bewegung bezogen auf die Umfangs-Seitenwand (220) in eine Arbeitsstellung, in welcher die Schließformkonstruktion (203) mit der Setenwand-Formkonstruktion (220) zusammenarbeitet und die Innenseite (244) einer vorderen Sitzlehnenbahn sorgt, deren Außenseite (242) in der Gestalt mit der vorbestimmten Gestalt der Formfläche (206) der zungenähnlichen Formkonstruktion (210) übereinstimmt, um einen begrenzten Raum zu bilden, innerhalb welchem eine vorbestimmte Menge an schäumbarem Material anhaftend an die Innenfläche (244) der vorderen Sitzlehnenbahn (240) der sackähnlichen Formkonstruktion (200) geschäumt werden kann.

2. Vorrichtung nach Anspruch 1, wobei die zungenähnliche Formkonstruktion (210) an einem Ende zur Tragkonstruktion (208) geschwenkt wird und die Montage- und Demontagestellung eine erhöhte Stellung der zungenähnlichen Formkonstruktion (210) bezogen auf die Tragkonstruktion (208) ist.

3. Vorrichtung nach Anspruch 1 oder 2, wobei die zungenähnliche Formkonstruktion (210) und die Tragkonstruktion (208) so gestaltet sind, daß dann, wenn die zungenähnliche Formkonstruktion (210) in der Formstellung ist und eine sackähnliche Konstruktion (200) mit der Innenseite nach außen in Arbeitsstellung über der zungenähnlichen Formkonstruktion (210) montiert wird, wobei die vordere Sitzlehnenbahn (240) der sackähnlichen Konstruktion (200) der Formfläche (206) der zungenähnlichen Formkonstruktion (210) gegenübersteht, ein Teil der sackähnlichen Konstruktion (200) außerhalb des Umfangs der vorderen Sitzlehnenbahn (240) unbegrenzt ist.

4. Form für das Formen von Produkten unter Verwendung eines Materialsacks (200), wobei dieser Materialsack eine vordere und eine hintere Sitzlehnenbahn (240, 250) beinhaltet, die entlang eines Endes und gegenüberliegender Seiten miteinander verbunden und entlang eines gegenüberliegenden Endes offen sind, **dadurch gekennzeichnet,** daß die Form umfaßt:
(a) einen Boden (204), der in mindestens zwei Teile trennbar ist, die beinhalten:
(i) eine Grundfläche (208) und
(ii) eine bewegliche Zunge (210), welche ein Muster trägt, wobei diese bewegliche Zunge (210) so betätigt werden kann, daß ein Materialsack (200) aufgenommen werden kann und so, daß die vordere Bahn (240) des Materialsacks mit dem Muster übereinstimmt, das von der beweglichen Zunge getragen wird,
wobei diese bewegliche Zunge (210) an einem Ende zu der Grundfläche (208) geschwenkt werden kann, damit diese Zunge (210) zwischen einer von der Grundfläche (208) erhöhten Stellung für die Montage und Demontage des Materialsacks (200) daran und einer Formstellung geschwenkt werden kann, in welcher die bewegliche Zunge (210) operativ auf dieser Grundfläche (208) durch die hintere Bahn (250) des Materialsacks (200) aufgesetzt wird; und
(b) eine Seitenwandbildung (220), die von dem Boden (204) weg und dorthin beweglich ist, damit ein Körper aus Schaummaterial an dem Materialsack (200) in einer solchen Art und Weise zum Haften gebracht werden kann, daß das Muster in der vorderen Bahn davon beibehalten werden kann.

5. Form nach Anspruch 4, wobei der Boden (204) an seinem Umfang (222) zu dem Zweck des Zusammenwirkens mit dem unteren Ende der Seitenwandbildung (220) hinterschnitten ist, um den Materialsack (200) dazwischen in Eingriff zu bringen.

6. Form nach Anspruch 4 oder 5, wobei die Zunge (210) auch Öffnungen (226) für einen Anschluß an eine Vakuumquelle trägt.

7. Verfahren für die Herstellung von Sitzlehnen und dergleichen Konstruktionen, die ein sackähnliches Überzugselement (200) verwenden, das eine vordere Sitzlehnenbahn (240) mit einer ersten Fläche (242) auf einer Seite und einer zweiten Fläche (244) auf der anderen und für eine hintere Sitzlehnenbahn (250), die mit der vorderen Sitzlehnenbahn (240) verbunden ist, sorgt, um eine generell röhrenförmige Gestalt zu definieren, die ein offenes Ende und ein geschlossenes Ende und eine Innen- und eine Außenseite hat, **dadurch gekennzeichnet,** daß das Verfahren die folgenden Schritte umfaßt:
das Überzugselement (200) teleskopartig mit der Innenseite nach außen auf eine zungenähnliche Formkonstruktion zu ziehen, die ein Vakuumwerkzeug (210) umfaßt, das die Ergänzung einer vorbestimmten Gestalt auf einer Seite (206) davon hat;
das Anpassen und Beibehalten der ersten Seite (242) der vorderen Sitzlehnenbahn (240) des Überzugselements (200) mit der vorbestimmten Gestalt der Fläche (206) des Vakuumwerkzeugs (210) durch Aufbringen eines Unterdrucks darauf;
das Formen eines expandierbaren flüssigen Schaummaterials, das auf die zweite Seite (244) der vorderen Sitzlehnenbahn (240) aufgebracht wird, zu einem Schaumkissen (270, 272), das mit der zweiten Seite (244) der vorderen Sitzlehnenbahn (240) verbunden wird, während die vorbestimmte Gestalt in der ersten Seite (242) davon aufrechterhalten wird, um so sicherzustellen, daß die vorbestimmte Gestalt in der ersten Seite (242) durch das geformte Schaumkissen (270, 272) beibehalten wird, wenn das Überzugselement (200) von der zungenähnlichen Formkonstruktion (210) entfernt wird;
Entfernen des Überzugselements (200) mit dem daran gebundenen Schaumkissen (270, 272) von der zungenähnlichen Formkonstruktion; und
Manipulieren des Überzugselementes (200) so, daß die erste Seite (242), die in der vorbestimmten Gestalt durch das geformte Schaumkissen (270, 272) gehalten wird, nach außen zeigt und die zweite Seite (244) mit dem daran gebundenen Schaumkissen (270, 272) darin eingeschlossen wird, damit man den Sitz dadurch fertigstellen kann, daß man das Überzugselement (200) mit dem daran gebundenen Schaumkissen (270, 272) über einen Sitzlehnenrahmen schiebt.

8. Verfahren nach Anspruch 7, wobei die erste Seite (242) der vorderen Sitzlehnenbahn (240) mit der vorbestimmten Gestalt durch Aufbringen von Vakuum auf das Vakuumwerkzeug (210) und durch Bewegen eines Kolbens (120') in Eingriff der zweiten Seite (244) davon und dann ein Bewegen des Kolbens (120') außerhalb eines Eingriffs mit der zweiten Seite (244) vor dem Einleiten von expandierbarem flüssigem Schaummaterial darauf in Übereinstimmung bringt, um das Aufbringen von Vakuum zu ermöglichen, um die erste Seite (242) in der vorbestimmten Gestalt solange zu halten, bis ein solches Beibehalten durch das geformte Schaumkissen (270, 272) angenommen wird.

9. Verfahren nach Anspruch 8, wobei die hintere Sitzlehnenbahn (250) des Überzugselements (200) mit der vorderen Sitzlehnenbahn (240) durch die Bahnen an der Seitenkante (246, 248) verbunden werden.

10. Verfahren nach Anspruch 7 unter Verwendung einer Form, die eine Grundfläche (208), eine bewegliche Zunge (210), die das Vakuumwerkzeug bildet, wobei diese bewegliche Zunge (210) an einem Ende zu der Grundfläche hin schwenkbar ist, um zu ermöglichen, daß diese Zunge zwischen einer von der Grundfläche (208) erhöhten Stellung für das Montieren und Demontieren des sackähnlichen Überzugselementes (200) und einer Formstellung geschwenkt wird, in welcher die bewegliche Zunge (210) funktionsfähig auf der Grundfläche (208) durch die hintere Sitzlehnenbahn (250) des Überzugselements aufsitzt und eine Seitenwandbildung (220) umfaßt, die von der Grundfläche (208) und der beweglichen Zunge (210) weg und zu diesen hin beweglich ist und wobei das Verfahren weiterhin umfaßt:
Bewegen der Zunge (210) in ihre erhöhte Stellung vor dem teleskopartigen Überstreifen des Überzugselementes (200) mit der Innenseite nach außen auf die Zunge (210);
Absenken der Zunge (210) auf die Grundfläche (208);
Absenken der Seitenwandbildung (220);
Ziehen des Materials des Überzugselementes (200) in die Form, wodurch eine Übereinstimmung der ersten Seite (242) mit der vorbestimmten Form auf der Fläche (206) der Zunge (210) hergestellt wird;
volles Absenken der Seitenwandbildung (220) auf die Zunge (210) und die Grundfläche (208);
Schließen der Form und Einleiten von schäumbarem Material in die Form, um den Schritt der Bildung des Schaumkissens (270, 272) zu bewerkstelligen; und
Öffnen der Form und Anheben der Zunge (210) vor dem Schritt des Entfernens des Überzugselementes (200).

## Revendications

1. Appareil de moulage d'un matériau capable de former une mousse en position sur un matériau de recouvrement formant une structure en forme de sac pour la formation d'un élément de dossier de siège, la structure en forme de sac (200) comprenant des panneaux avant et arrière (240, 250) de dossier qui interconnectés le long d'une première extrémité et de côtés opposés et sont libres le long de l'extrémité opposée ouverte, caractérisé en ce que l'appareil comprend :
une structure (210) de moule en forme de langue ayant une dimension et une configuration telles qu'elle pénètre dans la structure en forme de sac (200) par son extrémité opposée ouverte,
la structure (210) de moule en forme de langue ayant une surface de moule (206) de configuration prédéterminée qui, lorsque la structure en forme de sac (200) est montée sous forme retournée sur la structure du moule (210) en forme de langue en position de travail, elle se trouve en face de la surface externe (242) du panneau avant (240) de dossier de la structure en forme de sac (200),
une structure de support (208) et la structure de moule (210) en forme de langue étant montées afin qu'elles présentent un déplacement mutuel relatif entre (1) une position de montage et de démontage dans laquelle la structure de moule (210) en forme de langue est supportée en porte-à-faux par la structure de support (208) et permet le montage de la structure en forme de sac (200) sous forme retournée sur la structure de moule (200) en forme de langue en position de travail, puis son démontage, et (2) une position de moulage dans laquelle la structure de moule (200) en forme de langue est supportée par la structure de support (208) par l'intermédiaire du panneau arrière (250) de dossier de siège de la structure en forme de sac (200),
une structure de moule (220) de paroi latérale périphérique montée par rapport à la structure de moule (210) en forme de langue de manière qu'elle présente un déplacement relatif entre (1) une position de repos permettant à la structure en forme de sac (200) d'être montée en position de fonctionnement sur la structure de moule (210) en forme de langue et d'en être démontée, et (2) une position de travail dans laquelle la structure de moule (220) de paroi latérale est disposée à partir d'une surface interne (244) du panneau avant (240) de dossier de siège le long de sa périphérie,
un dispositif ayant des ouvertures (226) rejoignant la surface de moulage (206) de la structure de moule (210) en forme de langue pour la création de conditions de vide entre la surface de moule (206) et le panneau avant (240) de dossier de la structure en forme de sac (200) alors que la structure de moule (220) de paroi latérale est en position de travail d'une manière suffisante pour qu'elle mette la surface externe (242) du panneau avant (240) de dossier de siège disposé en face de la surface de moule (206) à la configuration prédéterminée de celle-ci, et
une structure de moule (203) de fermeture montée afin qu'elle présente un déplacement relatif par rapport à la structure de moule (220) de paroi latérale périphérique en position de travail dans laquelle la structure de moule (203) de fermeture coopère avec la structure de moule (220) de paroi latérale et la surface interne (244) du panneau avant (240) de dossier de siège ayant sa surface externe (242) dont la configuration correspond à la configuration prédéterminée de la surface de moule (206) de la structure de moule (210) en forme de langue afin qu'un espace confiné soit délimité pour qu'une quantité prédéterminée d'un matériau capable de former une mousse puisse former une mousse à l'intérieur en adhérant à la surface interne (244) du panneau avant (240) de dossier de siège de la structure en forme de sac (200).

2. Appareil selon la revendication 1, dans lequel la structure de moule (210) en forme de langue peut pivoter à une première extrémité de la structure de support (208), et la position de montage et de démontage est une position haute de la structure de moule (210) en forme de langue par rapport à la structure de support (208).

3. Appareil selon la revendication 1 ou 2, dans lequel la structure de moule (210) en forme de langue et la structure de support (208) ont une configuration telle que, lorsque la structure de moule (210) en forme de langue est dans la position de moulage et une structure en forme de sac (200) est montée en position retournée de travail sur la structure de moule (210) en forme de langue avec le panneau avant (240) de dossier de la structure en forme de sac (200) en face de la surface de moulage (206) de la structure de moule (210) en forme de langue, une partie de la structure en forme de sac (200), à l'extérieur de la périphérie du panneau avant (240) du dossier, n'est pas retenue.

4. Moule de moulage de produits à l'aide d'un sac (200) d'un matériau, le sac du matériau ayant des panneaux avant et arrière (240, 250) de dossier de siège, raccordés le long d'une extrémité et des côtés opposés et libres le long de l'extrémité opposée ouverte, caractérisé en ce que le moule comprend :
(a) une partie inférieure (204) qui peut être séparée en deux éléments au moins qui comportent :
(i) une base (208), et
(ii) une langue mobile (210) qui porte un dessin, la langue mobile (210) étant destinée à loger un sac (200) du matériau et à donner au panneau avant (240) du sac du matériau la forme du dessin porté par la langue mobile,
la langue mobile (210) pouvant pivoter à une première extrémité par rapport à la base (208) afin que la langue (210) puisse pivoter entre une position haute au-dessus de la base (208) pour le montage et le démontage du sac (200) du matériau, et une position de moulage dans laquelle la langue mobile (210) est en appui sur la base (208) avec interposition du panneau arrière (250) du sac (200) du matériau, et
(b) un élément conformé (220) de paroi latérale, mobile afin qu'il s'écarte et se rapproche de la partie inférieure (204) et en permettant à un corps d'un matériau sous forme de mousse d'adhérer au sac (200) du matériau de manière que le dessin soit conservé dans son panneau avant (240).

5. Moule selon la revendication 4, dans lequel la partie inférieure (204) comporte un dégagement à sa périphérie (222) afin qu'elle puisse coopérer avec l'extrémité inférieure de l'élément conformé (220) de paroi latérale, avec disposition entre eux du sac (200) du matériau.

6. Moule selon la revendication 4 ou 5, dans lequel la langue (210) a aussi des ouvertures (226) afin qu'elle soit fixée à une source de vide.

7. Procédé de fabrication de dossiers de siège et de structures analogues, à l'aide d'un organe de recouvrement (200) en forme de sac comprenant un panneau avant (240) de dossier de siège formant une première surface (242) d'un premier côté et une seconde surface (244) de l'autre côté, et un panneau arrière (250) de dossier de siège raccordé au panneau avant (240) de dossier de siège afin qu'il délimite une configuration de forme générale tubulaire ayant une extrémité ouverte et une extrémité fermée et des côtés interne et externe, caractérisé en ce que le procédé comprend les étapes suivantes :
la disposition télescopique de l'organe de recouvrement (200) sous forme retournée sur une structure de moule en forme de langue comprenant un outil aspirant (210) ayant une configuration complémentaire d'une configuration prédéterminée sur une face (206),
la mise à la configuration et le maintien de la première surface (242) du panneau avant (240) de dossier de l'organe de recouvrement (200) à la configuration prédéterminée de ladite face (206) de l'outil aspirant (210) par application de vide à celui-ci,
le moulage d'un matériau liquide qui peut se dilater en formant une mousse, introduit sur la seconde surface (244) du panneau avant (240) de dossier de siège sous forme d'une garniture de mousse (270, 272) collée à la seconde surface (244) du panneau avant (240) de dossier de siège alors que la configuration prédéterminée est conservée à la première surface (242), de manière que la configuration prédéterminée soit conservée à la première surface (242) par la garniture de mousse moulée (270, 272) lorsque l'organe de recouvrement (200) est retiré de la structure de moule (210) en forme de langue,
l'enlèvement de l'organe de recouvrement (200) avec la garniture de mousse (270, 272), qui est collée sur elle, de la structure de moule (210) en forme de langue, et
la manipulation de l'organe de recouvrement (200) afin que la première surface (242) maintenue à la configuration prédéterminée par la garniture de mousse moulée (270, 272) soit tournée vers l'extérieur et que la seconde surface (244) à laquelle est collée la garniture de mousse (270, 272) soit entourée à l'intérieur, de sorte que le dossier de siège peut être terminé par déplacement de l'organe de recouvrement (200), ayant la garniture de mousse (270, 272) qui lui est collée, sur un châssis de dossier de siège.

8. Procédé selon la revendication 7, dans lequel la première surface (242) du panneau avant (240) de dossier de siège est mise à la configuration prédéterminée par application de vide à l'outil aspirant (210) et par déplacement d'un plongeur (120') au contact de la seconde surface (244), puis par déplacement du plongeur (120') afin qu'il s'écarte de sa position de coopération avec la seconde surface (244) avant l'introduction du matériau liquide dilatable destiné à former une mousse de manière que l'application du vide puisse maintenir la première surface (242) à la configuration prédéterminée jusqu'à ce que ce maintien soit assuré par la garniture de mousse moulée (270, 272).

9. Procédé selon la revendication 8, dans lequel le panneau arrière (250) de dossier de l'organe de recouvrement (200) est raccordé au panneau avant (240) de dossier par des panneaux de bords latéraux (246, 248).

10. Procédé selon la revendication 7, mettant en oeuvre un moule qui comporte une base (208), une langue mobile (210) formant l'outil aspirant, la langue mobile (210) pouvant pivoter à une première extrémité sur la base (208) afin que la langue (210) puisse pivoter entre une position haute par rapport à la base (208) pour le montage et le démontage de l'organe de recouvrement (200) en forme de sac et une position de moulage dans laquelle la langue mobile (210) est logée en position de fonctionnement sur la base (208) avec interposition du panneau arrière (250) de dossier de siège de l'organe de recouvrement (200), et un élément conformé (220) de paroi latérale, mobile afin qu'il puisse s'écarter et se rapprocher de la base (208) et de la langue mobile (210), et le procédé comprend en outre :
le déplacement de la langue (210) vers sa position haute avant montage télescopique de l'organe de recouvrement (200) à l'état retourné sur la langue (210),
la descente de la langue (210) sur la base (208),
la descente de l'élément conformé (220) de paroi latérale,
l'aspiration du matériau de l'organe de recouvrement (200) dans le moule afin que la première surface (242) soit mise à la configuration prédéterminée sur la face (206) de la langue (210),
la descente complète de l'élément conformé (220) de paroi latérale sur la langue (210) et la base (208),
la fermeture du moule et l'introduction du matériau capable de former une mousse dans le moule pour le moulage de la garniture de mousse (270, 272), et
l'ouverture du moule et le soulèvement de sa langue (210) avant l'étape d'extraction de l'organe de recouvrement (200).
